(19) **Europäisches Patentamt / European Patent Office / Office européen des brevets**

(11) **EP 4 465 095 B1**

(12) **EUROPEAN PATENT SPECIFICATION**

(45) Date of publication and mention of the grant of the patent:
**04.03.2026 Bulletin 2026/10**

(21) Application number: **24169665.7**

(22) Date of filing: **11.04.2024**

(51) International Patent Classification (IPC):
**G01V 1/30** *(2006.01)*   **G01V 1/28** *(2006.01)*

(52) Cooperative Patent Classification (CPC):
**G01V 1/282; G01V 1/303;** G01V 2210/43;
G01V 2210/44; G01V 2210/48; G01V 2210/614;
G01V 2210/6222

(54) **APPARATUS AND METHOD FOR OPTIMIZING SUBSURFACE VELOCITY MODEL**

VORRICHTUNG UND VERFAHREN ZUR OPTIMIERUNG EINES UNTERIRDISCHEN GESCHWINDIGKEITSMODELLS

APPAREIL ET PROCÉDÉ D'OPTIMISATION DE MODÈLE DE VITESSE DE SOUS-SURFACE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.05.2023 US 202363466990 P**
**23.02.2024 KR 20240026259**

(43) Date of publication of application:
**20.11.2024 Bulletin 2024/47**

(73) Proprietor: **Seoul National University R&DB Foundation**
**Seoul 08826 (KR)**

(72) Inventor: **Shin, Chang Soo**
**08646 Seoul (KR)**

(74) Representative: **Grünecker Patent- und Rechtsanwälte**
**PartG mbB**
**Leopoldstraße 4**
**80802 München (DE)**

(56) References cited:
**US-A1- 2009 006 000**

• **LEE DAWOON ET AL: "Elastic Full-Waveform Inversion Using Both the Multiparametric Approximate Hessian and the Discrete Cosine Transform", IEEE TRANSACTIONS ON GEOSCIENCE AND REMOTE SENSING, vol. 60, 9 August 2021 (2021-08-09), USA, pages 1 - 10, XP093203995, ISSN: 0196-2892, DOI: 10.1109/ TGRS.2021.3101193**
• **GAO FENGXIA ET AL: "3-D Seismic Inversion by Model Parameterization With Fourier Coefficients", vol. 61, 1 January 2023 (2023-01-01), USA, pages 1 - 16, XP093204001, ISSN: 0196-2892, Retrieved from the Internet <URL:https://ieeexplore.ieee.org/stampPDF/ getPDF.jsp?tp=&arnumber=10105640& ref=aHR0cHM6Ly9pZWVleHBsb3JlLmllZ WUub3JnL2Fic3RyYWN0L2RvY3VtZW50LzEwM TA1NjQw> [retrieved on 20240911], DOI: 10.1109/ TGRS.2023.3268410**
• **GAO FENGXIA ET AL: "3-D Seismic Inversion by Model Parameterization With Fourier Coefficients", IEEE TRANSACTIONS ON GEOSCIENCE AND REMOTE SENSING, vol. 61, 19 April 2023 (2023-04-19), USA, pages 1 - 17, XP093320102, ISSN: 0196-2892, DOI: 10.1109/ TGRS.2023.3268410**

# EP 4 465 095 B1

**Description**

BACKGROUND OF THE INVENTION

Field of the Invention

The present invention relates to seismic exploration technology, and more particularly to an apparatus and method for obtaining a subsurface velocity model.

Description of the Related Art

The exploration seismology using FWI(Full Waveform Inversion) is a technique that increases a probability of finding a geological location where subsurface energy resources such as oil and natural gas are buried. In exploration seismology, a subsurface stratum structure is determined through intensive computations using seismic data, and the underground stratum structure is analyzed and visualized using a velocity model to evaluate the location and reserves of the subsurface energy resources.

To accurately analyze the underground stratum structure using FWI, the velocity model needs to be repeatedly updated to minimize an objective function (residual), which is defined as a difference between measured data by manmade seismic sources and synthetic data (synthesized from computer modeling of wave equations).

In a FWI of the exploration seismology, a good initial velocity model is crucial to both reduce the number of iterations for high resolution inversion of the seismic data and guarantee the convergence to the true velocity model.

The present inventor has conducted research on subsurface velocity model imaging technology that may obtain the velocity model by applying a Gauss Newton method through a spectral parameterization of the velocity model in exploration seismology.

Patent Document: Republic of Korea Patent No. 10-2026063 (announced on September 27, 2019)

LEE DAWOON ET AL: "Elastic Full-Waveform Inversion Using Both the Multiparametric Approximate Hessian and the Discrete Cosine Transform", IEEE TRANSACTIONS ON GEOSCIENCE AND REMOTE SENSING, vol. 60, 9 August 2021, pages 1-10, ISSN: 0196-2892, DOI: 10.1109/TGRS.2021.3101193 proposes seismic elastic full-waveform inversion (EFWI) using both the multiparametric approximate Hessian and the discrete cosine transform (DCT). EFWI using the multiparametric approximate Hessian can suppress crosstalk artifacts for each physical parameter, but the computational burden increases as the number of physical parameters considered increases. In this study, to reduce the computational burden, DCT was used to compress the model parameters and accelerate EFWI in the truncated DCT domain. EFWI using DCT is possible to increase the calculation efficiency by reducing the total number of unknown variables (see abstract). In particular, Gauss-Newton multiparametric EFWI accelerated by the use of low-frequency components is performed.

GAO FENGXIA ET AL: "3-D Seismic Inversion by Model Parameterization With Fourier Coefficients", IEEE TRANSACTIONS ON GEOSCIENCE AND REMOTE SENSING, vol. 61, pages 1 -16, ISSN: 0196-2892, DOI: 10.1109/TGRS.2023.3268410, retrievable from the Internet: URL:https://ieeexplore.ieee.org/stampPDF/getPDF.jsp?tp=&arnumber=10105640&ref=aHR0cH M6Ly9pZWVleHBsb3JlLmllZWUub3JnL2Fic3RyYWN0L2RvY3VtZW50LzEw MTA1NjQw explains that in seismic inversion, the subsurface model can be parameterized by a truncated Fourier series, and then, the inversion problem is the inversion of the Fourier coefficients. To improve the efficiency of the evaluation of the Fourier coefficients and the reconstruction of the model from the inverted coefficients, it is proposed to use the efficient implementation of the fast Fourier transform (FFT) to speed up these two calculations.

US 2009/0006000 A1 relates to a Laplace transform system comprising a processor, a measured time domain wavefield, a velocity model, and Laplace damping constants, wherein the processor is programmed to calculate a substantially about zero frequency component of a Fourier transform of a time domain damped wavefield, wherein the time domain damped wavefield is damped by the Laplace damping constants to obtain long wavelength velocity information for deeper subsurface regions.

SUMMARY OF THE INVENTION

It is the object of the present invention to improve prior art systems. This object is solved by the subject matter of the independent claims. Preferred embodiments are defined by the dependent claims.

An aspect of the present invention is to provide an apparatus and method for obtaining a subsurface velocity model by applying a Gauss Newton method through a spectral parameterization of the velocity model in exploration seismology.

In accordance with an aspect of the present invention, the above and other objects can be accomplished by the provision of an apparatus for obtaining an good initial subsurface velocity model including a nonvolatile memory configured to store execution code for obtaining the good initial velocity model software, a processor configured to execute the execution code for obtaining the subsurface velocity model software stored in the nonvolatile memory, a display configured to display a software for obtaining the initial subsurface velocity model output by the execution code for the technique obtaining the good initial subsurface velocity model software executed by the processor, and a user input unit configured to receive user operation for input and output of the software of obtaining the good initial subsurface velocity model, wherein a finding of good initial subsurface velocity model software includes a parameterization section configured to parametrize a velocity model, and a velocity model optimization section configured to applying a Gauss Newton method through waveform inversion for the velocity model parameterized by the parameterization section to repeatedly update the velocity model, thereby obtaining the good initial subsurface velocity model.

The parameterization section includes a partial differentiation of the subsurface velocity model configured to parameterize a velocity function included in a wave equation in a frequency domain and to take partial derivative of the subsurface velocity function with respect to a parameter, and a synthetic seismic data generation section configured to generate synthetic seismic data from a partial differentiation result by the partial differentiation section of the subsurface velocity function.

The velocity model optimization section includes a residual definition section configured to define a residual between the measured seismic data and the synthetic seismic data, it may further include a partial differentiation section configured tc partially differentiate the synthetic seismic data with respect to a coefficient of complex Fourier series or Fourier transform and a velocity model update section configured to apply the Gauss Newton method and to update the velocity model.

The velocity model update section may find the good initial velocity model by repeatedly updating the velocity model until the residual is minimized.

In accordance with another aspect of the present invention, there is provided a method of optimizing a subsurface velocity model including parameterizing a velocity model in exploration seismology, and using Gauss Newton method through waveform inversion for the velocity model parameterized by the parameterizing to repeatedly update the velocity model, thereby optimizing the good initial velocity model.

The parameterizing includes parameterizing a velocity function included in a wave function in a frequency domain and taking partial derivative of the parameterized velocity function with respect to a parameter, and generating synthetic seismic data from a partial differentiation result by the parameterizing a velocity function.

The Gauss Newton method may include defining a partial derivative of the synthetic seismic data and the synthetic seismic data, taking partial derivative of the synthetic seismic data with respect to a coefficient of the complex Fourier series or the Fourier transform. then applying the Gauss Newton method, and updating the velocity model.

The Gauss Newton method include optimizing the velocity model by repeatedly updating the velocity model until the residual is minimized.

## BRIEF DESCRIPTION OF THE DRAWINGS

The above and other objects, features and other advantages of the present invention will be more clearly understood from the following detailed description taken in conjunction with the accompanying drawings, in which:

FIG. 1 is a block diagram illustrating a configuration of an embodiment of a subsurface velocity model optimization apparatus according to the present invention;
FIG. 2 is a block diagram illustrating a configuration of an embodiment of subsurface velocity model optimization software executed by the subsurface velocity model optimization apparatus according to the present invention; and
FIG. 3 is a flowchart illustrating a configuration of an embodiment of a method of optimizing the subsurface velocity model according to the present invention.

## DETAILED DESCRIPTION OF THE INVENTION

Hereinafter, the present invention will be described in detail through preferred embodiments described with reference to the attached drawings so that those skilled in the art may easily understand and reproduce the embodiments. Even though specific embodiments are illustrated in the drawings and related detailed descriptions are given, the specific embodiments are not intended to limit various embodiments of the present invention to any particular form.

In describing the present invention, when it is determined that a detailed description of a related known function or configuration may unnecessarily obscure the gist of the embodiments of the present invention, the detailed description will be omitted.

When a component is mentioned as being "coupled" or "connected" to another component, it is understood that the component may be directly coupled or connected to another component, and still another component may be present therebetween.

On the other hand, when a component is mentioned as being "directly coupled" or "directly connected" to another component, it should be understood that there are no other components therebetween.

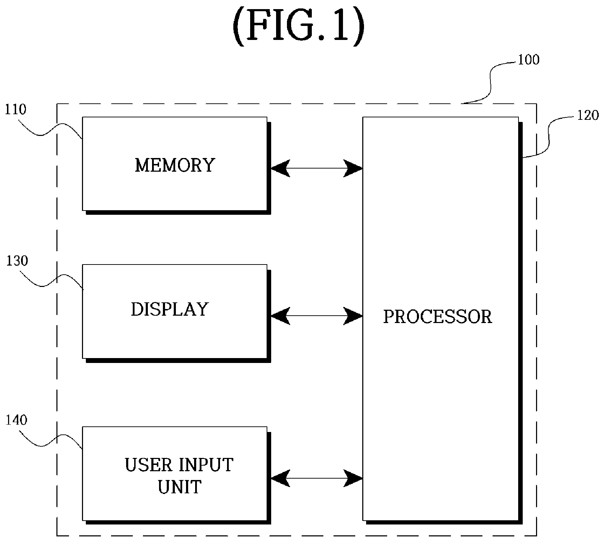

FIG. 1 is a block diagram illustrating a configuration of an embodiment of a subsurface velocity model optimization apparatus according to the present invention. As illustrated in FIG. 1, a subsurface velocity model optimization apparatus 100 according to this embodiment includes a nonvolatile memory 110, a processor 120, a display 130, and a user input unit 140.

The nonvolatile memory 110 stores execution code for subsurface velocity model optimization software 200. For example, the nonvolatile memory 110 may be a flash memory, an EEPROM, etc.

The processor 120 executes the execution code for the subsurface velocity model optimization software 200 stored in the nonvolatile memory 110. In this instance, the processor 120 may be a single core processor or a multicore processor.

The display 130 displays a subsurface velocity model optimization software screen output by the execution code for the subsurface velocity model optimization software 200 executed by the processor 120. For example, the display 130 may be an LED, an OLED, etc. However, the display 130 is not limited thereto.

The user input unit 140 receives user operations for input and output of the subsurface velocity model optimization software 200. For example, the user input unit 140 may be a keyboard, a mouse, a touch panel, etc. However, the user input unit 140 is not limited thereto.

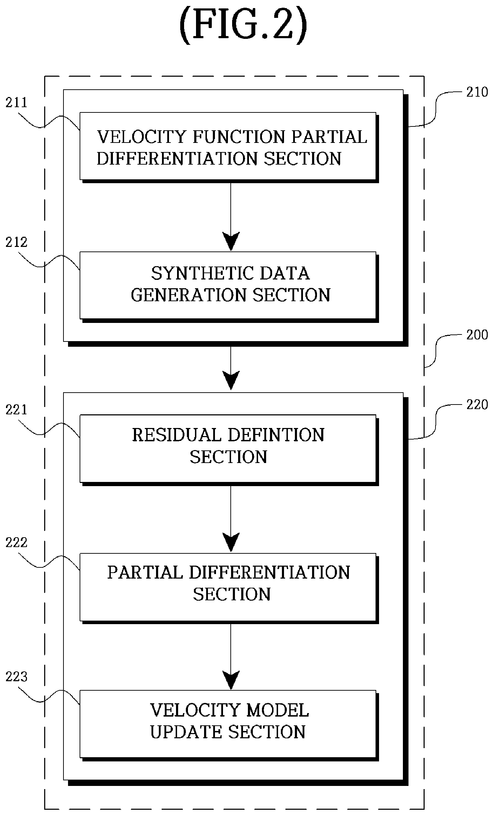

FIG. 2 is a block diagram illustrating a configuration of an embodiment of the subsurface velocity model optimization software executed by the subsurface velocity model optimization apparatus according to the present invention. As illustrated in FIG. 2, the subsurface velocity model optimization software 200 according to this embodiment includes a parameterization section 210 and a velocity model optimization section 220.

The parameterization section 210 selects an initial velocity model of all exploration methods including exploration seismology and performs parameterization for the selected initial velocity model. In this instance, the parameterization section 210 includes a velocity function partial differentiation section 211 and a synthetic data generation section 212.

The velocity function partial differentiation section 211 parameterizes a velocity function included in a wave equation in the frequency domain and take partial derivative the parameterized velocity function with respect to a parameter, in examples not according to the wording of the claims the wave equation may be in the Laplace domain or the Laplace Fourier domain.

(Equation 1)

$$\frac{\partial^2 u}{\partial z^2} + \frac{\omega^2}{v^2} u = f(z)$$

Equation 1 expresses a one-dimensional wave equation in the frequency domain. In Equation 1, v denotes a velocity function, and when the reciprocal of the square of the velocity function is set to s(z), Equation 1 is expressed as Equation 2.

(Equation 2)

$$\frac{\partial^2 u}{\partial z^2} + s(z)\omega^2 u = f(z)$$

Each element (matrix coordinate) of a matrix of a 1D wave equation, a two-dimensional (2D) wave equation, or a three-dimensional (3D) wave equation may be expressed in the form of a straight line, a square, or a cuboid having an underground velocity.

A velocity column of the matrix of the 1D wave equation is expressed in the form of Fourier series or Fourier transform; in examples not according to the wording of the claims, a velocity column of the matrix of the 1D wave equation may be expressed in the form of cosine transform, sine transform, generalized Fourier series: Chebyshev polynomials, Hermitian polynomials, Laguerre polynomial, spherical harmonics function, spherical Bessel function, etc

Equation 3 expresses the velocity function v(z) of the 1D wave equation in the form of Fourier Transform.

(Equation 3)

$$v(z) = \sum_{n=-\infty}^{\infty} a_n e^{\frac{in\pi z}{l}}$$

Equation 3 means that a value of a partial derivative of a wave field (Synthetic seismic data) may be obtained by parameterizing a Fourier coefficient $a_n$ of the velocity function as $a_i, i = -\infty, ..., \infty$.

When the velocity function of Equation 3 is processed using a low pass filter (LPF), Equation 4 is obtained.

(Equation 4)

$$v(z) \cong \sum_{n=-N}^{n=N} a_n e^{\frac{in\pi z}{l}}$$

When Equation 4 is taken partial derivative with respect to the Fourier coefficient $a_n$, Equation 5 is obtained.

(Equation 5)

$$\frac{d\frac{1}{v(z)}}{da_n} = \frac{-2e^{\frac{in\pi z}{l}}}{(\sum_{n=-N}^{n=N} a_n e^{\frac{in\pi z}{l}})^2}$$

When Equation 5 is substituted into Equation 1, Equation 6 is obtained.

(Equation 6)

$$\frac{\partial^2 u}{\partial z^2} + \frac{1}{\left(\sum_{n=-N}^{n=N} a_n e^{\frac{in\pi z}{l}}\right)^2} \omega^2 u = f(z)$$

When Equation 6 is taken partial derivative with respect to the Fourier coefficient $a_n$, a real part is expressed as Equation 7-1, and an imaginary part is expressed as Equation 7-2.

(Equation 7-1)

$$\frac{\partial^2 u'}{\partial z^2} + \left(\frac{1}{\left(\sum_{n=-N}^{n=N} a_n e^{\frac{in\pi z}{l}}\right)^2}\right)\omega^2 u' + \frac{-2e^{\frac{in\pi z}{l}}}{\left(\sum_{n=-N}^{n=N} a_n e^{\frac{in\pi z}{l}}\right)^3}\omega^2 u = 0$$

In Equation 7-1, $n = -N,...,0,...,N$, $u' = \dfrac{\partial u}{\partial a_n}$, $a_n = r_n$, and $r_n$ is a real part of the Fourier coefficient $a_n$.

(Equation 7-2)

$$\frac{\partial^2 u'}{\partial z^2} + \left(\frac{1}{\left(\sum_{n=-N}^{n=N} a_n e^{\frac{in\pi z}{l}}\right)^2}\right)\omega^2 u' + \frac{-2ie^{\frac{in\pi z}{l}}}{\left(\sum_{n=-N}^{n=N} a_n e^{\frac{in\pi z}{l}}\right)^3}\omega^2 u = 0$$

In Equation 7-2, $n = -N, ...,0,...,N$, $u' = \dfrac{\partial u}{\partial a_n}$, $a_n = i_n$, and $i_n$ is an imaginary part of the Fourier coefficient $a_n$.

The synthetic seismic data generation section 212 generates synthetic seismic data (virtual source field) from a partial differentiation result by the velocity function partial differentiation section 211.

When the third term of Equations 7-1 and 7-2 is shifted to the right, Equations 8-1 and 8-2 are obtained.

(Equation 8-1)

$$\frac{\partial^2 u'}{\partial z^2} + \left(\frac{1}{\left(\sum_{n=-N}^{n=N} a_n e^{\frac{in\pi z}{l}}\right)^2}\right)\omega^2 u' = -\frac{2e^{\frac{in\pi z}{l}}}{\left(\sum_{n=-N}^{n=N} a_n e^{\frac{in\pi z}{l}}\right)^3}f^*$$

In Equation 8-1, $n = -N,...,0,1,2 ...,N$, and $f^*$ denotes virtual earthquake data.

(Equation 8-2)

$$\frac{\partial^2 u'}{\partial z^2} + \left(\frac{1}{\left(\sum_{n=-N}^{n=N} a_n e^{\frac{in\pi z}{l}}\right)^2}\right)\omega^2 u' = -\frac{2ie^{\frac{in\pi z}{l}}}{\left(\sum_{n=-N}^{n=N} a_n e^{\frac{in\pi z}{l}}\right)^3}f^*$$

In Equation 8-2, *n = -N,...,0,1,2...,N,* and *f\** denotes virtual earthquake data.

The velocity model optimization section 220 apply Gauss Newton Method through waveform inversion for the velocity model parameterized by the parameterization section 210 to repeatedly update the velocity model, thereby optimizing the velocity model. In this instance, the velocity model optimization section 220 includes a residual definition section 221, and it may further include a partial differentiation section 222, and a velocity model update section 223.

The residual definition section 221 defines a residual of the measured seismic data and the synthetic seismic data.

The partial differentiation section 222 configured to take partial derivative of the synthetic seismic data or the wavefield with respect to a coefficient of the complex Fourier series or the Fourier transform, in examples not according to the wording of the claims take partial derivative with respect to a coefficient of cosine transform or sine transform.

The velocity model update section 223 configured to applying the Gauss Newton method to update the velocity model. In this instance, the velocity model update section 223 is implemented to optimize the velocity model by repeatedly updating the velocity model until the residual is minimized.

For example, the velocity model update section 223 may be implemented to optimize the velocity model by repeatedly updating the velocity model until the residual, that is, an error, is minimized using the Gauss-Newton Method (Pratt et al, 1988). The Gauss-Newton Method is a method of repeatedly solving a solution through the following Equations 12 and 13.

(Equation 12)

$$\mathbf{p}^{(k+1)} = \mathbf{p}^{(k)} - \mathbf{H}_a^{-1}\nabla_p E \ \ or \ \ \delta\mathbf{p} = -\mathbf{H}_a^{-1}\nabla_p E$$

(Equation 13)

$$\mathbf{H} = \mathbf{J}^T\mathbf{J}$$

In Equations 12 and 13, p denotes a velocity model matrix element, H denotes an approximate Hessian matrix, E denotes a residual, which is an objective function, $\nabla_p E$ denotes a gradient of the residual, which is the objective function, and J denotes a Jacobian matrix.

The velocity model update section 223 may optimize the velocity model by repeatedly updating the velocity model until the residual is minimized using Equation 12 and Equation 13.

The 1D wave equation has been described above as an example. However, a 2D wave equation may be applied as follows.

(Equation 14)

$$\nabla^2 \boldsymbol{u} + \frac{1}{\{(\sum_{n=-N}^{N}\sum_{m=-M}^{M}a_{nm}e^{in\pi x/N}e^{im\pi y/M})\}^2}\omega^2 u = f(x,z)$$

Equation 14 is a 2D wave equation in the frequency domain, where N denotes a length of a horizontal distance of the velocity model, and M denotes a length of a vertical distance of the velocity model.

When Equation 14 is partially differentiated with respect to a 2D Fourier coefficient as in the case of the 1D wave equation described above, a real part is expressed as Equation 15-1, and an imaginary part is expressed as Equation 15-2.

(Equation 15-1)

$$\nabla^2\frac{\partial u}{\partial a_n} + \frac{1}{\{(\sum_{n=-N}^{N}\sum_{m=-M}^{M}a_{nm}e^{in\pi x/N}e^{im\pi y/M})\}^2}\omega^2\frac{\partial u}{\partial a_n}$$

$$= -\omega^2\frac{-2e^{in\pi x/N}e^{im\pi y/M}}{\{(\sum_{n=-N}^{N}\sum_{m=-M}^{M}a_{nm}e^{in\pi x/N}e^{im\pi y/M})\}^2}u$$

(Equation 15-2)

$$\nabla^2 \frac{\partial u}{\partial a_n} + \frac{1}{\{(\sum_{n=-N}^{N} \sum_{m=-M}^{M} a_{nm} e^{in\pi x/N} e^{im\pi y/M})\}^2} \omega^2 \frac{\partial u}{\partial a_n}$$

$$= -\omega^2 \frac{-2i e^{in\pi x/N} e^{im\pi y/M}}{\{(\sum_{n=-N}^{N} \sum_{m=-M}^{M} a_{nm} e^{in\pi x/N} e^{im\pi y/M})\}^2} u$$

In Equations 15-1 and 15-2, n = -N,...,0,...,N,m = - M, ...,0, ... M .

Meanwhile, a 3D wave equation may be applied as follows.

(Equation 16)

$$\nabla^2 u + \frac{1}{\left\{\sum_{n=-N}^{n=N} \sum_{m=-M}^{m=M} \sum_{l=-L}^{l=L} a_{lmn} e^{in\pi x/N} e^{in\pi y/M} e^{in\pi z/L}\right\}^2} \omega^2 u$$

$$= f(x, y, z)$$

When Equation 16 is taken partial derivate with respect to a 3D Fourier coefficient as in the case of the 1D wave equation described above, a real part is expressed as Equation 17-1, and an imaginary part is expressed as Equation 17-2.

(Equation 17-1)

$$\nabla^2 \frac{\partial u}{\partial a_n} + \omega^2 \frac{1}{\left\{\sum_{n=-N}^{n=N} \sum_{m=-M}^{m=M} \sum_{l=-L}^{l=L} a_{lmn} e^{in\pi x/N} e^{in\pi y/M} e^{in\pi z/L}\right\}^2} \frac{\partial u}{\partial a_n}$$

$$= -\omega^2 \frac{2 e^{in\pi x/N} e^{in\pi y/M} e^{in\pi z/L}}{\left\{\sum_{n=-N}^{n=N} \sum_{m=-M}^{m=M} \sum_{l=-L}^{l=L} a_{lmn} e^{in\pi x/N} e^{in\pi y/M} e^{in\pi z/L}\right\}^2} u$$

(Equation 17-2)

$$\nabla^2 \frac{\partial u}{\partial a_n} + \omega^2 \frac{1}{\left\{\sum_{n=-N}^{n=N} \sum_{m=-M}^{m=M} \sum_{l=-L}^{l=L} a_{lmn} e^{in\pi x/N} e^{in\pi y/M} e^{in\pi z/L}\right\}^2} \frac{\partial u}{\partial a_n}$$

$$= -\omega^2 \frac{2i e^{in\pi x/N} e^{in\pi y/M} e^{in\pi z/L}}{\left\{\sum_{n=-N}^{n=N} \sum_{m=-M}^{m=M} \sum_{l=-L}^{l=L} a_{lmn} e^{in\pi x/N} e^{in\pi y/M} e^{in\pi z/L}\right\}^2} u$$

In Equations 17-1 and 17-2, n = -N, ...,0,1, ...N , m = -M, ... ,0, ... M, l = -L, ...,0, ...L .

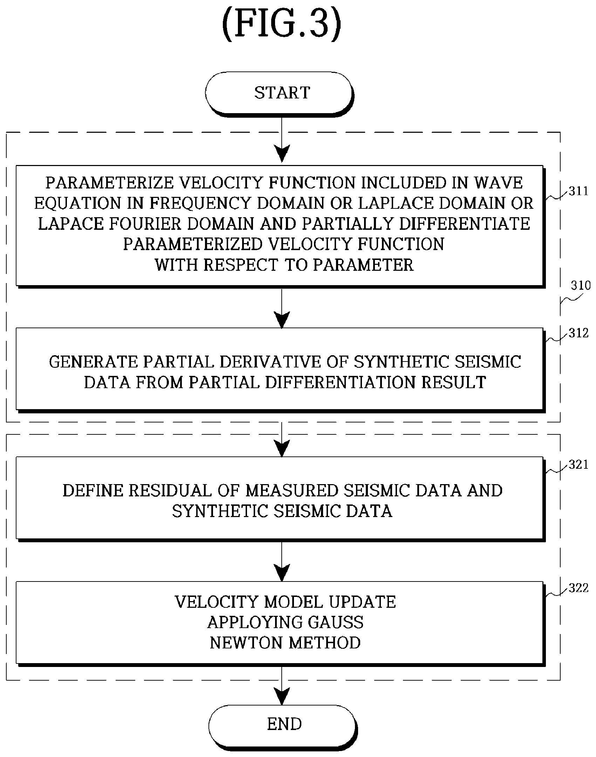

A subsurface velocity model optimization operation of the subsurface velocity model optimization apparatus according to the present invention described above will be described through FIG. 3. FIG. 3 is a flowchart illustrating a configuration of an embodiment of a method of optimizing the subsurface velocity model according to the present invention.

First, in a parameterization step 310, the subsurface velocity model optimization apparatus performs parameterization for all velocity models of exploration, including exploration seismology. In this instance, the parameterization step 310 includes a velocity function partial differentiation step 311 and a synthetic seismic data generation step 312.

In the partial differentiation step 311, the subsurface velocity model optimization apparatus parameterizes the velocity function included in the wave equation in the frequency domain and partially differentiates the parameterized velocity function with respect to a parameter, in examples not according to the wording of the claims the wave equation may be in the Laplace domain or the Laplace Fourier domain. . A description related thereto has been given using equations, and thus redundant description will be omitted.

In the synthetic seismic data generation step 312, the subsurface velocity model optimization apparatus generates virtual earthquake data from a partial differentiation result by the partial differentiation of the velocity function step 311. A description related thereto has been given using equations, and thus redundant description will be omitted.

Next, in the velocity model optimization step 320, the subsurface velocity model optimization apparatus derives a steepest descent direction or the Gauss Newton method through waveform inversion for the velocity model parameterized in the parameterization step 310 to repeatedly update the velocity model, thereby optimizing the velocity model. In this instance, the velocity model optimization step 320 includes a residual definition step 321, and it may include a partial differentiation step 322, and a velocity model update step 323.

In the residual definition step 321, the subsurface velocity model optimization apparatus defines a residual, a difference between the measured seismic data and the synthetic seismic data. A description related thereto has been given using equations, and thus redundant description will be omitted.

In the partial differentiation step 322, the subsurface velocity model optimization apparatus partially differentiates the residual defined by the residual definition step 321 with respect to a coefficient of the complex Fourier Series or the Fourier Transform, in examples not according to the wording of the claims it partially differentiates the residual with respect to a coefficient of cosine transform or sine transform. A description related thereto has been given using equations, and thus redundant description will be omitted.

In this instance, in the velocity model update step 323, the velocity model is optimized by repeatedly updating the velocity model until the residual is minimized. In the velocity model update step 323, implementation is performed to optimize the velocity model by repeatedly updating the velocity model until the residual, that is, an error, is minimized using the Gauss-Newton Method.

By this implementation, the present invention optimizes the velocity model of the exploration seismology, sc that features or properties related to the underground stratum structure may be analyzed more accurately and efficiently.

The various embodiments disclosed in this specification and drawings are merely presented as specific examples to aid understanding, and are not intended to limit the scope of the various embodiments of the present invention.

Accordingly, the scope of the various embodiments of the present invention should be interpreted as including all changed or modified forms derived based on the technical idea of the various embodiments of the present invention in addition to the embodiments described herein, insofar as they fall within the scope of the invention as set forth in the accompanying claims.

The present invention may be industrially used in the field of technology related to exploration seismology and application technology thereof.

**Claims**

1. An apparatus (100) for optimizing a subsurface velocity model of exploration seismology, the apparatus comprising:

   a nonvolatile memory (110) that stores execution code for subsurface velocity model optimization software (200);
   a processor (120) configured to execute the execution code for the subsurface velocity model optimization software stored in the nonvolatile memory;
   a display (130) configured to display a subsurface velocity model optimization software screen output by the execution code for the subsurface velocity model optimization software executed by the processor; and
   a user input unit (140) configured to receive user operation for input and output of the subsurface velocity model optimization software,
   wherein the subsurface velocity model optimization software comprises:

   a parameterization section (210) configured to parametrize a velocity model of exploration seismology; and
   a velocity model optimization section (220) configured to applying a Gauss Newton method through waveform inversion for the velocity model parameterized by the parameterization section to repeatedly update the velocity model, thereby obtaining the good initial subsurface velocity model,
   wherein the velocity model optimization section comprises:

   a residual definition section (221) configured to define a residual of measured seismic data and the synthetic seismic data;
the apparatus **characterized in that**
the parameterization section includes:

a velocity function partial differentiation section (211) configured to parameterize a Fourier coefficient of a velocity function and to take a partial derivative of the parameterized velocity function with respect to the Fourier coefficient, the velocity function being included in a wave equation in a frequency domain and the velocity function being in the form of a Fourier transform; and
a synthetic data generation section (212) configured to generate synthetic seismic data from a partial differentiation result by the partial differentiation of the velocity function partial differentiation section.

2.  The apparatus according to claim 1, wherein the velocity model optimization section further comprises:

a partial differentiation section (222) configured to a take partial derivative of the synthetic seismic data with respect to a coefficient of the Fourier transform; and
a velocity model update section (223) configured to applying the Gauss Newton method to update the velocity model.

3.  The apparatus according to claim 2, wherein the velocity model update section optimizes the velocity model by repeatedly updating the velocity model until the residual is minimized.

4.  A computer-implemented method of optimizing a subsurface velocity model of exploration seismology, the method comprising:

parameterizing a velocity model of exploration seismology; and
optimizing the velocity model by applying a Gauss Newton method through waveform inversion for the velocity model parameterized by the parameterizing to repeatedly update the velocity model, thereby optimizing the velocity model,
wherein the optimizing the velocity model comprises:

defining (321) a residual of measured seismic data and the synthetic seismic data;
the method **characterized in that** the parameterizing comprises: parameterizing (311) a Fourier coefficient of a velocity function and taking a partial derivative of the parameterized velocity function with respect to the Fourier coefficient, the velocity function being included in a wave function in a frequency domain and the velocity function being in the form of a Fourier transform; and
generating (312) synthetic seismic data from a partial differentiation result of the parameterized velocity function.

5.  The method according to claim 4, wherein the optimizing the velocity model further comprises:

taking a partial derivative of the synthetic seismic data with respect to a coefficient of the Fourier transform; and
applying (322) the Gauss Newton method to update the velocity model.

6.  The method according to claim 5, wherein the Gauss Newton method comprises optimizing the velocity model by repeatedly updating the velocity model until the residual is minimized.

**Patentansprüche**

1.  Vorrichtung (100) zum Optimieren eines Untergrundgeschwindigkeitsmodells in der Explorationsseismologie, wobei die Vorrichtung umfasst:

einen nichtflüchtigen Speicher (110), der den Ausführungscode für die Software (200) zur Optimierung des Untergrundgeschwindigkeitsmodells speichert;
einen Prozessor (120), der dazu konfiguriert ist, den Ausführungscode für die in dem nichtflüchtigen Speicher gespeicherte Software zur Optimierung des Untergrundgeschwindigkeitsmodells auszuführen;
eine Anzeige (130), die dazu konfiguriert ist, einen Bildschirm für die Software zur Optimierung des Untergrundgeschwindigkeitsmodells anzuzeigen, der von dem Ausführungscode für die Software zur Optimierung des Untergrundgeschwindigkeitsmodells ausgegeben wird, der von dem Prozessor ausgeführt wird; und eine Benutzereingabeeinheit (140), die dazu konfiguriert ist, eine Benutzerbedienung für die Eingabe und Ausgabe der Software zur Optimierung des Untergrundgeschwindigkeitsmodells zu empfangen, wobei die Software zur Optimierung des Untergrundgeschwindigkeitsmodells Folgendes umfasst:

einen Parametrisierungsabschnitt (210), der dazu konfiguriert ist, ein Geschwindigkeitsmodell der Explorationsseismologie zu parametrisieren; und einen Geschwindigkeitsmodell-Optimierungsabschnitt (220), der dazu konfiguriert ist, ein Gauß-Newton-Verfahren durch Wellenforminversion für das durch den Parametrisierungsabschnitt parametrisierte Geschwindigkeitsmodell anzuwenden, um das Geschwindigkeitsmodell wiederholt zu aktualisieren, wodurch das gute anfängliche Untergrundgeschwindigkeitsmodell erhalten wird, wobei der Geschwindigkeitsmodell-Optimierungsabschnitt Folgendes umfasst:

einen Restdefinitionsabschnitt (221), der dazu konfiguriert ist, einen Rest von gemessenen seismischen Daten und den synthetischen seismischen Daten zu definieren; wobei die Vorrichtung **dadurch gekennzeichnet ist, dass** der Parametrisierungsabschnitt Folgendes beinhaltet:

einen Abschnitt (211) zur partiellen Differentiation der Geschwindigkeitsfunktion, der dazu konfiguriert ist, einen Fourier-Koeffizienten einer Geschwindigkeitsfunktion zu parametrisieren und eine partielle Ableitung der parametrisierten Geschwindigkeitsfunktion in Bezug auf den Fourier-Koeffizienten vorzunehmen, wobei die Geschwindigkeitsfunktion in einer Wellengleichung in einem Frequenzbereich beinhaltet ist und die Geschwindigkeitsfunktion in Form einer Fourier-Transformation vorliegt; und einen Abschnitt (212) zur Erzeugung synthetischer Daten, der dazu konfiguriert ist, synthetische seismische Daten aus einem Ergebnis der partiellen Differentiation durch die partielle Differentiation des Abschnitts zur partiellen Differentiation der Geschwindigkeitsfunktion zu erzeugen.

2. Vorrichtung nach Anspruch 1, wobei der Abschnitt zur Optimierung des Geschwindigkeitsmodells des Weiteren umfasst:

einen Abschnitt (222) zur partiellen Differentiation, der dazu konfiguriert ist, eine partielle Ableitung der synthetischen seismischen Daten in Bezug auf einen Koeffizienten der Fourier-Transformation vorzunehmen; und einen Abschnitt (223) zur Aktualisierung des Geschwindigkeitsmodells, der dazu konfiguriert ist, das Gauß-Newton-Verfahren anzuwenden, um das Geschwindigkeitsmodell zu aktualisieren.

3. Vorrichtung nach Anspruch 2, wobei der Abschnitt zur Aktualisierung des Geschwindigkeitsmodells das Geschwindigkeitsmodell durch wiederholtes Aktualisieren des Geschwindigkeitsmodells optimiert, bis der Restwert minimiert ist.

4. Computerimplementiertes Verfahren zum Optimieren eines Untergrundgeschwindigkeitsmodells in der Explorationsseismologie, wobei das Verfahren Folgendes umfasst:

Parametrisieren eines Geschwindigkeitsmodells der Explorationsseismologie; und Optimieren des Geschwindigkeitsmodells durch Anwenden eines Gauß-Newton-Verfahrens durch Wellenforminversion für das durch die Parametrisierung parametrisierte Geschwindigkeitsmodell, um das Geschwindigkeitsmodell wiederholt zu aktualisieren, wodurch das Geschwindigkeitsmodell optimiert wird, wobei das Optimieren des Geschwindigkeitsmodells Folgendes umfasst:

Definieren (321) eines Rests von gemessenen seismischen Daten und den synthetischen seismischen Daten; wobei das Verfahren **dadurch gekennzeichnet ist, dass** das Parametrisieren Folgendes umfasst:

Parametrisieren (311) eines Fourier-Koeffizienten einer Geschwindigkeitsfunktion und Vornehmen einer partiellen Ableitung der parametrisierten Geschwindigkeitsfunktion in Bezug auf den Fourier-Koeffizienten, wobei die Geschwindigkeitsfunktion in einer Wellenfunktion in einem Frequenzbereich beinhaltet ist und die Geschwindigkeitsfunktion in Form einer Fourier-Transformation vorliegt; und Erzeugen (312) synthetischer seismischer Daten aus einem partiellen Differentiationsergebnis der parametrisierten Geschwindigkeitsfunktion.

**5.** Verfahren nach Anspruch 4, wobei das Optimieren des Geschwindigkeitsmodells des Weiteren umfasst:

Vornehmen einer partiellen Ableitung der synthetischen seismischen Daten in Bezug auf einen Koeffizienten der Fourier-Transformation; und
Anwenden (322) des Gauß-Newton-Verfahrens, um das Geschwindigkeitsmodell zu aktualisieren.

**6.** Verfahren nach Anspruch 5, wobei das Gauß-Newton-Verfahren das Optimieren des Geschwindigkeitsmodells durch wiederholtes Aktualisieren des Geschwindigkeitsmodells umfasst, bis der Rest minimiert ist.

**Revendications**

**1.** Appareil (100) pour l'optimisation d'un modèle de vitesse souterraine d'exploration sismique, l'appareil comprenant :

une mémoire non volatile (110) qui stocke un code d'exécution pour un logiciel d'optimisation de modèle de vitesse souterraine (200) ;
un processeur (120) configuré pour exécuter le code d'exécution pour le logiciel d'optimisation de modèle de vitesse souterraine stocké dans la mémoire non volatile ;
un affichage (130) configuré pour afficher un écran de logiciel d'optimisation de modèle de vitesse souterraine généré par le code d'exécution pour le logiciel d'optimisation de modèle de vitesse souterraine exécuté par le processeur ; et
une unité de saisie d'utilisateur (140) configurée pour recevoir les opérations d'utilisateur pour les entrées et les sorties du logiciel d'optimisation de modèle de vitesse souterraine,
dans lequel le logiciel d'optimisation de modèle de vitesse souterraine comprend :

une section de paramétrisation (210) configurée pour paramétrer un modèle de vitesse d'exploration sismique ; et une section d'optimisation de modèle de vitesse (220) configurée pour appliquer une méthode de Gauss-Newton par inversion de forme d'onde pour le modèle de vitesse paramétré par la section de paramétrisation afin de mettre à jour le modèle de vitesse de manière répétée, obtenant ainsi le bon modèle de vitesse souterraine initial,
dans lequel la section d'optimisation de modèle de vitesse comprend :

une section de définition résiduelle (221) configurée pour définir un résidu des données sismiques mesurées et des données sismiques synthétiques ;
l'appareil étant **caractérisé en ce que** la section de paramétrisation inclut :

une section de différenciation partielle de la fonction de vitesse (211) configurée pour paramétrer un coefficient de Fourier d'une fonction de vitesse et pour calculer une dérivée partielle de la fonction de vitesse paramétrée par rapport au coefficient de Fourier, la fonction de vitesse étant incluse dans une équation d'onde dans un domaine fréquentiel et la fonction de vitesse présentant la forme d'une transformée de Fourier ; et
une section de génération de données synthétiques (212) configurée pour générer des données sismiques synthétiques à partir d'un résultat de différenciation partielle par la différenciation partielle de la section de différenciation partielle de la fonction de vitesse.

**2.** Appareil selon la revendication 1, dans lequel la section d'optimisation de modèle de vitesse comprend en outre :

une section de différenciation partielle (222) configurée pour calculer la dérivée partielle des données sismiques synthétiques par rapport à un coefficient de la transformée de Fourier ; et
une section de mise à jour du modèle de vitesse (223) configurée pour appliquer la méthode de Gauss-Newton afin de mettre à jour le modèle de vitesse.

**3.** Appareil selon la revendication 2, dans lequel la section de mise à jour du modèle de vitesse optimise le modèle de vitesse en mettant à jour le modèle de vitesse de manière répétée jusqu'à ce que le résidu soit minimisé.

**4.** Procédé implémenté par un ordinateur d'optimisation d'un modèle de vitesse souterraine d'exploration sismique, le procédé comprenant :

le paramétrage d'un modèle de vitesse d'exploration sismique ; et
l'optimisation du modèle de vitesse en appliquant la méthode de Gauss-Newton via une inversion de forme d'onde pour le modèle de vitesse paramétré par la paramétrisation afin de mettre à jour le modèle de vitesse de manière répétée, optimisant ainsi le modèle de vitesse,
dans lequel l'optimisation du modèle de vitesse comprend :

la définition (321) d'un résidu de données sismiques mesurées et des données sismiques synthétiques ;
le procédé étant **caractérisé en ce que** la paramétrisation comprend :

la paramétrisation (311) d'un coefficient de Fourier d'une fonction de vitesse et le calcul d'une dérivée partielle de la fonction de vitesse paramétrée par rapport au coefficient de Fourier, la fonction de vitesse étant incluse dans une fonction d'onde dans un domaine fréquentiel et la fonction de vitesse étant sous la forme d'une transformée de Fourier ; et
la génération (312) de données sismiques synthétiques à partir d'un résultat de différenciation partielle de la fonction de vitesse paramétrée.

**5.** Procédé selon la revendication 4, dans lequel l'optimisation du modèle de vitesse comprend en outre :

le calcul d'une dérivée partielle des données sismiques synthétiques par rapport à un coefficient de la transformée de Fourier ; et
l'application (322) de la méthode de Gauss-Newton pour mettre à jour le modèle de vitesse.

**6.** Procédé selon la revendication 5, dans lequel la méthode de Gauss-Newton comprend l'optimisation du modèle de vitesse en mettant à jour le modèle de vitesse de manière répétée jusqu'à ce que le résidu soit minimisé.

# (FIG.1)

# (FIG.2)

# (FIG.3)

START

PARAMETERIZE VELOCITY FUNCTION INCLUDED IN WAVE
EQUATION IN FREQUENCY DOMAIN OR LAPLACE DOMAIN OR
LAPACE FOURIER DOMAIN AND PARTIALLY DIFFERENTIATE
PARAMETERIZED VELOCITY FUNCTION
WITH RESPECT TO PARAMETER
— 311

— 310

GENERATE PARTIAL DERIVATIVE OF SYNTHETIC SEISMIC
DATA FROM PARTIAL DIFFERENTIATION RESULT
— 312

DEFINE RESIDUAL OF MEASURED SEISMIC DATA AND
SYNTHETIC SEISMIC DATA
— 321

VELOCITY MODEL UPDATE
APPLOYING GAUSS
NEWTON METHOD
— 322

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102026063

- US 20090006000 A1

**Non-patent literature cited in the description**

- **LEE DAWOON et al.** Elastic Full-Waveform Inversion Using Both the Multiparametric Approximate Hessian and the Discrete Cosine Transform. *IEEE TRANSACTIONS ON GEOSCIENCE AND REMOTE SENSING*, 09 August 2021, vol. 60, ISSN 0196-2892, 1-10

- **GAO FENGXIA et al.** 3-D Seismic Inversion by Model Parameterization With Fourier Coefficients. *IEEE TRANSACTIONS ON GEOSCIENCE AND REMOTE SENSING*, vol. 61, ISSN 0196-2892, 1-16, https://ieeexplore.ieee.org/stampPDF/getPDF.jsp?tp=&arnumber=10105640&ref=aHR0cHM6Ly9pZWVleHBsb3JlLmllZWUub3JnL2Fic3RyYWN0L2RvY3VtZW50LzEwMTA1NjQw